(19) Europäisches Patentamt
European Patent Office
Office européen des brevets

(11) Veröffentlichungsnummer: **0 230 550 B1**

(12) **EUROPÄISCHE PATENTSCHRIFT**

(45) Veröffentlichungstag der Patentschrift: **24.04.91**

(51) Int. Cl.5: **C08G 63/60**, C08G 69/34, C09K 19/38

(21) Anmeldenummer: **86116321.0**

(22) Anmeldetag: **25.11.86**

# (54) Vollaromatische flüssigkristalline Polykondensate, deren Herstellung und Verwendung.

(30) Priorität: **04.12.85 DE 3542832**

(43) Veröffentlichungstag der Anmeldung:
**05.08.87 Patentblatt 87/32**

(45) Bekanntmachung des Hinweises auf die Patenterteilung:
**24.04.91 Patentblatt 91/17**

(84) Benannte Vertragsstaaten:
**BE CH DE FR GB IT LI LU NL SE**

(56) Entgegenhaltungen:
**EP-A- 0 092 617**
**EP-A- 0 095 938**
**EP-A- 0 131 846**
**EP-A- 0 187 734**
**EP-A- 0 191 705**
**FR-A- 2 400 044**

(73) Patentinhaber: **BASF Aktiengesellschaft**
**Carl-Bosch-Strasse 38**
**W-6700 Ludwigshafen(DE)**

(72) Erfinder: **Kock, Hans-Jakob, Dr.**
**Benckiserstrasse 63**
**W-6700 Ludwigshafen(DE)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung sind vollaromatische flüssigkristalline Polykondensate die unterhalb 320°C eine flüssigkristalline fadenbildende Schmelze bilden.

Es sind schon eine Reihe von flüssigkristallinen Polykondensaten wie Polyester oder Polyesteramide bekannt. Solche Polymere sind jedoch hinsichtlich ihrer Wärmeformbeständigkeit, ihrer Verarbeitbarkeit und im Hinblick auf ihre geringe Abriebfestigkeit verbesserungsbedürftig. In der US-PS 4 318 841 werden aromatische Polyester beschrieben, die aus 2,6-Hydroxynaphthalincarbonsäure, 4-Hydroxybenzoesäure, Terephthalsäure und Resorcin aufgebaut sind. Die Wärmeformbeständigkeit solcher Polymeren läßt jedoch zu wünschen übrig, da sie keine Teilkristallinität aufweisen. Das gleiche gilt für die aus der DE-OS 33 25 705 bekannten mesomorphen Polyester, die aus p-Hydroxybenzoesäure, Terephthalsäure, 2,7-Dihydroxynaphthalin und gegebenenfalls Hydrochinon aufgebaut sind. Ferner sind aus der US-PS 4 066 620 Polyester bekannt, die aus substituierten Hydrochinonen, 4,4'-Dihydroxydiphenylether, Terephthalsäure oder 2,6-Naphthalindicarbonsäure aufgebaut sind. Eine anisotrope Schmelze wird jedoch erst bei Temperaturen über 300°C erreicht. Andere, aus der US-PS 4 093 595 bekannte flüssigkristalline Polyester, die unter anderem Methylhydrochinon als Baustein enthalten, bedürfen einer Verarbeitungstemperatur von über 320°C.

Es war deshalb die technische Aufgabe gestellt, vollaromatische flüssigkristalline Polykondensate zu entwickeln, die niedrige Verarbeitungstemperaturen erlauben, jedoch gute Dauergebrauchseigenschaften bei erhöhter Temperatur haben und sich zudem durch eine geringe Eigenfarbe, glatte Oberfläche und gute Chemikalienbeständigkeit auszeichnen.

Diese Aufgabe wird gelöst durch vollaromatische Polykondensate die unterhalb 320°C eine flüssigkristalline Schmelze bilden und im Bereich zwischen der Glasübergangstemperatur Tg und dem Schmelzpunkt zweiphasig sind, aufgebaut aus

a) mindestens 10 Mol.% wiederkehrenden Einheiten der Formel I

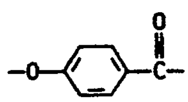

I

wobei die Summe der Molprozente der Komponenten a), b), c), d) und e) jeweils 100 Mol.% ergibt.

Die neuen vollaromatischen flüssigkristallinen Polykondensate haben den Vorteil, daß sie keiner hohen Verarbeitungstemperaturen bedürfen und darüberhinaus auch bei erhöhter Temperatur selbst über der Glasübergangstemperatur gute Dauergebrauchseigenschaften aufweisen. Ferner zeichnen sich die neuen vollaromatischen Polykondensate durch hohe Steifigkeit sowie Zähigkeit aus und haben eine glatte Oberfläche sowie eine geringe Eigenfarbe und gute Chemikalienbeständigkeit. Besonders bemerkenswert ist es, daß die neuen Polykondensate auch bei der Verarbeitung der anisotropen Schmelze bei schnellem Abkühlen die Teilkristallinität erhalten bleibt und somit eine hohe Wärmeformbeständigkeit und Formstabilität der so erzeugten Formkörper gewährleistet wird.

Der flüssigkristalline Zustand der Polykondensate kann mit dem Polarisationsmikroskop nach einer in der DE-AS 25 20 819 beschriebenen Methode nachgewiesen werden. Zwischen gekreuzten Polarisatoren weisen die Polykondensatschmelzen die in einer Schichtdicke von 10 µm zwischen Glasplatten aufgetragen sind, Texturen auf, die einer mesomorphen Phase zugeordnet werden können.

Der erfindungsgemäßen Polykondensate sind aufgebaut aus

a) mindestens 10 Mol.%, vorteilhaft mindestens 20 Mol.% wiederkehrenden Einheiten der Formel I

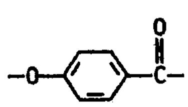

I

Eine geeignete Ausgangsverbindung ist 4-Hydroxybenzoesäure.

b) 5 bis 30 Mol.%, vorteilhaft 10 bis 25 Mol.% wiederkehrenden Einheiten der Formel II

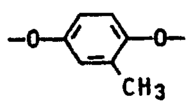

II

Vorteilhaft geht man von Methylhydrochinon aus.

e) einer Summe der Komponenten b), c) und d) entsprechenden molaren Menge an wiederkehrenden Einheiten der Formel X

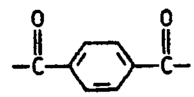

X

Vorteilhaft geht man von Terephthalsäure aus.

wobei die Summe der Molprozente der Komponenten a), b), c), d) und e) jeweils 100 Mol.% ergibt.

Es ist auch möglich, daß ein Teil, z.B. bis zu 50 % der erforderlichen molaren Menge an Einheiten der Formel X ersetzt sind durch wiederkehrende Einheiten der Formel XI

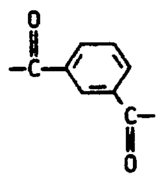

XI

Eine geeignete Ausgangsverbindung ist beispielsweise Isophthalsäure.

Ferner ist es möglich, einen Teil der Komponenten a), z.B. bis zu einer Menge von 15 Mol.% zu ersetzen durch mindestens eine der wiederkehrenden Einheiten der Formeln XII, XIII oder XIV

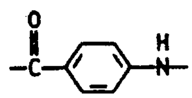

XII

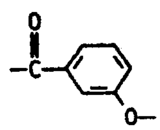

XIII

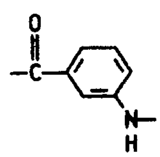

XIV

Geeignete Ausgangsverbindungen sind für Einheiten der Formel XII p-Aminobenzoesäure, für Einheiten der Formel XIII m-Hydroxybenzoesäure und für Einheiten der Formel XIV m-Aminobenzoesäure.

Bevorzugte vollaromatische Polykondensate haben eine Glasübergangstemperatur Tg von ≧ 90° C, insbesondere von ≧ 130°C. Die Glastemperatur soll dabei gemessen werden mit der DSC-Methode, wie sie beschrieben ist von K.H. Illers in Makromol. Chemie, Band 127 (1969), Seiten 1ff. Die vollaromatisch flüssigkristallinen Polykondensate bilden bei einer Temperatur < 320°C. insbesondere < 300° C eine flüssigkristalline fadenbildende Schmelze. Die erfindungsgemäßen Polykondensate sind im Bereich von der Glasübergangstemperatur Tg bis zu ihrem Schmelzpunkt zweiphasig, wobei vorteilhaft die Schmelztemperatur der teilkristallinen Phase im Bereich von ≧ 240° C und ≦ 290° C liegt.

In bevorzugten Polykondensaten wird die Teilkristallinität auch bei schnellem Abkühlen aus der anisotropen Schmelze mit einer Geschwindigkeit von ≧ 300°/min auf eine Temperatur unterhalb der Glasübergangstemperatur erhalten. Dies bewirkt, daß sich die Teilkristallinität auch oberhalb der Glasübergangstemperatur in einer verbesserten Wärmeformbeständigkeit und einer Formstabilität der so erzeugten Formkörper niederschlägt.

Die erfindungsgemäßen flüssig-kristallinen Polykondensate sind beispielsweise erhältlich durch eine analoge Arbeitsweise, wie sie in der US-PS 4 375 530 und US-PS 4 118 372 beschrieben werden. Die

Massekondensation umfaßt im allgemeinen eine Alkanoylierungsstufe, in der die eingesetzten Monomeren mit Säureanhydriden umgesetzt werden und eine Polymerisationsstufe, in der das Polykondensat unter Abspaltung von aliphatischen Carbonsäuren gebildet wird. Verfahren, bei denen eine Vorpolymerisationsstufe zwischengeschaltet wird, sind aus der DE-OS 33 20 118 zu entnehmen. Die beschriebenen Verfahren benötigen allerdings Reaktionszeiten von mehr als 10 Stunden.

Nach einer vorteilhaften Arbeitsweise erhält man die erfindungsgemäßen Polykondensate in einem Einstufenverfahren, bei dem man die nicht-derivatisierten Ausgangsstoffe im beschriebenen molaren Verhältnis unter Verwendung von Anhydriden niederer Fettsäuren, z.B. Fettsäuren mit 2 bis 4 Kohlenstoffatomen, insbesondere Essigsäureanhydrid umsetzt. Es ist möglich, hierbei nach dem Stand der Technik bekannte Katalysatoren, die Polykondensation sowie Umesterungsreaktionen beschleunigen, in Mengen von 0,001 bis 1 Gew.% mitzuverwenden. Bei der Umsetzung werden die nichtderivatisierten Ausgangsstoffe zusammen mit Fettsäureanhydrid vorteilhaft in einem mindestens 5 %igen molaren Überschuß, bezogen auf die vorhandenen Hydroxy- bzw. Aminogruppen, unter Inertgasatmosphäre und Rühren auf eine Temperatur erhitzt, bei der Rückfluß zu beobachten ist. Vorteilhaft wird die Temperatur stufenweise gesteigert, z.B. höchstens 5 Stunden vorzugsweise bis zu 2 Stunden auf 130 bis 170 °C. Anschließend wird die Temperatur z.B. innerhalb von 2 bis 2 1/2 Stunden auf 250 bis 350 °C gesteigert. Hierbei werden überschüssige Fettsäureanhydride und Fettsäuren abdestilliert. Um die Reaktion zu vervollständigen, hat es sich als vorteilhaft erwiesen, gegen Ende der Umsetzung verminderten Druck z.B. bis zu 0,5 mbar, vorzugsweise von 10 bis 50 mbar anzuwenden.

Bemerkenswert und nicht vorherzusehen bei der Anwendung dieses Einstufenverfahrens ist zunächst die problemlose und vollständige Reaktion auch ohne Katalysatorzusatz zu den gewünschten Polymeren in einer relativ kurzen Zeit. Dies ist umso erstaunlicher als durch die Vielzahl chemisch unterschiedlicher Hydroxygruppen und Aminogruppen eine Abstufung der Reaktivitäten und damit ein mangelhafter polymerer Aufbau zu erwarten wäre.

Die so erhaltenen vollaromatischen flüssig-kristallinen Polykondensate werden vorteilhaft nach der Kondensation in der Schmelze in festem Zustand z.B. bei einer Temperatur von 150 bis 250 °C bis zu gewünschten Viskosität weiterkondensiert. Diese Nachkondensation in fester Phase kann sowohl vor als auch nach einer thermoplastischen Verarbeitung erfolgen. Die Festphasenkondensation führt man vorteilhaft in Inertgasatmosphäre, z.B. Stickstoff durch.

Die Polykondensate gemäß der Erfindung können übliche Zusatz- und Hilfsstoffe in wirksamen Mengen enthalten. Übrige Zusatzstoffe sind Stabilisatoren gegen Abbau durch molekularen Sauerstoff, Wärme oder UV-Licht, z.B. sterisch gehinderte Phenole, Hydrochinone, substituierte Resorcine, Salicylate, Benztriazole oder Benzophenone.

Andere geeignete Zusatzstoffe sind Farbstoffe und Pigmente wie Nicrosin, Titandioxid, Phthalocyanine.

Geeignete Zusätze sind auch faser- und pulverförmige Füllstoffe und Verstärkungsmittel z.B. in Mengen bis zu 70 Gew.%, wie Kohlenstoff-Fasern, Glasfasern, amorphe Kieselsäure, Asbest, Magnesiumsilikat, Aluminiumsilikat, Magnesiumcarbonat, Kreide oder Feldspat.

Die erfindungsgemäßen vollaromatischen flüssig-kristallinen Polykondensate eignen sich zur Herstellung von Fasern, Fäden, Folien, Schäumen und technischen Formteilen durch Spritzguß, Pressen oder Extrusion. Die aus den erfindungsgemäßen Polykondensaten hergestellten Formteile zeichnen sich durch hervorragende mechanische Eigenschaften, wie Steifigkeit, Festigkeit und Zähigkeit aus. Sie sind weitgehend chemikalienresistent und flammwidrig. Zudem besitzen sie eine hohe Wärmeformbeständigkeit und eine glatte abriebfeste Oberfläche. Die erfindungsgemäßen Polykondensate eignen sich daher hervorragend zur Herstellung von Formteilen für die Elektro- und Datentechnik im Fahrzeugbau und andere technische Bereiche. Sie können aber auch als Überzugs- und Beschichtungsmittel pulverförmig dispergiert oder als Film verwendet werden.

Die Erfindung sei an folgenden Beispielen veranschaulicht.

Beispiel 1

0,2 mol (30,3 mol%) Terephthalsäure, 0,26 mol (39,4 mol%) 4-Hydroxybenzoesäure, 0,03 mol (4,5 mol%) 2,7-Dihydroxynaphthalin, 0,04 mol (6,1 mol%) 4,4'-Dihydroxybiphenyl, 0,13 mol (19,7 mol%) Methylhydrochinon sowie 0,86 mol Essigsäureanhydrid werden unter $N_2$-Atmosphäre in einem Metallbad auf 100 °C erhitzt. Die Temperatur wird dann in 30' auf 150 °C, in weiteren 100' auf 200 °C und anschließend in 120' auf die Endtemperatur von 300 °C erhöht.

Anschließend wird der Druck auf 560 mbar und dann alle 10' auf die Hälfte verringert. Das Endvakuum beträgt 50 mbar. Man erhält so eine hochviskose, fadenbildende Schmelze. Polymerschmelze und erstarrtes Polymeres zeigen einen perlmuttartigen Glanz. Aus DSC-Messungen ergibt sich eine Glastemperatur von 110 °C sowie eine Schmelztemperatur von 260 °C (Peak-maximum, DSC). Oberhalb 260 °C existiert eine homogene flüssigkristalline Schmelze aus der das Polymerisat verarbeitet werden kann.

Die inhärente Viskosität beträgt 1,3 dl/g, gemessen in 0,1 gew.%iger Lösung in Pentafluorphenol bei 60 °C.

Beispiel 2

Analog wie in Beispiel 1 werden 0,2 mol Terephthalsäure (30,3 mol%), 0,26 mol 4-Hydroxybenzoesäure (39,4 mol%), 0,04 mol 4,4′-Dihydroxybiphenyl (6,1 mol%), 0,16 mol Methylhydrochinon (24,2 mol%) sowie 0,86 mol Essigsäureanhydrid umgesetzt.

Die Endtemperatur beträgt 315 °C; der Enddruck ist 20 mbar.

Das erhaltene Produkt ist flüssigkristallin. Die DSC-Daten ergeben eine Glastemperatur von 93 °C und eine Schmelztemperatur von 280 °C. Die inhärente Viskosität beträgt 0,8 dl/g.

**Ansprüche**

**1.** Vollaromatische flüssig-kristalline Polykondensate die unterhalb 320 °C eine flüssigkristalline fadenbildende Schmelze bilden und im Bereich zwischen der Glasübergangstemperatur Tg und dem Schmelzpunkt zweiphasig sind, aufgebaut aus

a) mindestens 10 Mol.% wiederkehrenden Einheiten der Formel I

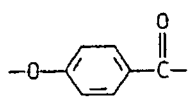

I

b) 5 bis 30 Mol.% wiederkehrenden Einheiten der Formel II

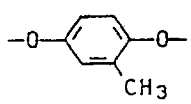

II

c) 2 bis 18 Mol.% mindestens einer der wiederkehrenden Einheiten der Formeln III, IV oder V

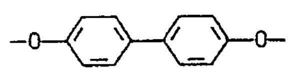

III

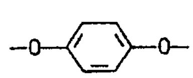

IV

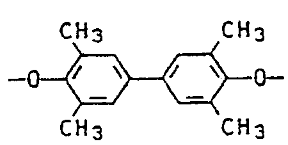

V

d) 0 bis 20 Mol.% mindestens einer der wiederkehrenden Einheiten der Formeln VI, VII, VIII oder IX

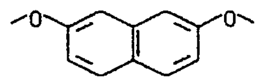

VI

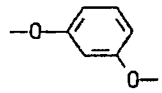

VII

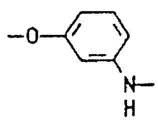

VIII

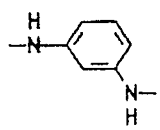

IX

e) einer Summe der Komponenten b), c) und d) entsprechenden molaren Menge an wiederkehrenden Einheiten der Formel X

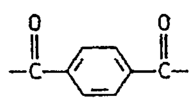

X

wobei die Summe der molaren Anteile der Komponenten a), b), c), d) und e) jeweils 100 Mol.% ergibt.

**2.** Vollaromatische flüssig-kristalline Polykondensate nach Anspruch 1, dadurch gekennzeichnet , daß ein Teil der Komponente e) ersetzt ist durch wiederkehrende Einheiten der Formel XI

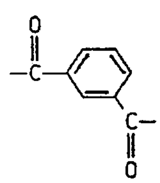

XI

**3.** Vollaromatische flüssig-kristalline Polykondensate nach den Ansprüchen 1 und 2, dadurch gekennzeichnet , daß die Komponente a) teilweise ersetzt ist durch mindestens eine der wiederkehrenden Einheiten der Formeln XII, XIII oder XIV

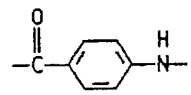

XII

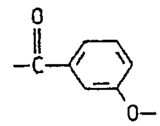

XIII

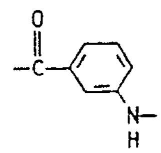

XIV

4. Vollaromatische flüssig-kristalline Polykondensate nach den Ansprüchen 1 bis 3, dadurch gekennzeichnet, daß die teilkristalline Phäse einen Schmelzpunkt ≧ 240 ° C und ≦ 290 ° C hat.

5. Vollaromatische flüssig-kristalline Polykondensate nach den Ansprüchen 1 bis 4, dadurch gekennzeichnet, daß die Polykondensate nach Abkühlen der Schmelze mit einer Geschwindigkeit von ≧ 300 ° C/min auf eine Temperatur unterhalb der Glasübergangstemperatur Tg teilkristallin sind.

6. Verfahren zur Herstellung von vollaromatischen flüssig-kristallinen Polykondensaten nach den Ansprüchen 1 bis 5, dadurch gekennzeichnet, daß man die Monomeren in Form der underivatisierten Hydroxyamino-bzw. Carboxy-Verbindungen in einem Einstufenverfahren und in den beschriebenen molaren Verhältnissen unter Zusatz von überschüssigem Fettsäureanhydrid bei erhöhter Temperatur umsetzt und Fettsäureanhydrid und Fettsäure aus dem Reaktionsgemisch abdestilliert.

7. Verfahren nach Anspruch 6, dadurch gekennzeichnet, daß man die vollaromatischen Polykondensate nach der Kondensation in der Schmelze durch Kondensation in fester Phase bei einer Temperatur von 150 bis 250 ° C nachkondensiert.

8. Verwendung von vollaromatischen flüssig-kristallinen Polykondensaten nach den Ansprüchen 1 bis 7 zur Herstellung von Fäden, Fasern, Folien und Formteilen sowie Überzügen.

## Claims

1. A wholly aromatic liquid-crystalline polycondensate which forms a liquid-crystalline fiber-forming melt below 320°C and is diphase within the range from the glass transition temperature Tg to the melting point, composed of

   a) not less than 10 mol % of repeat units of the formula I

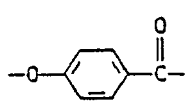

I

   b) from 5 to 30 mol % of repeat units of the formula II

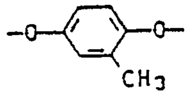

II

c) from 2 to 18 mol % of one or more of the repeat units of the formulae III, IV or V

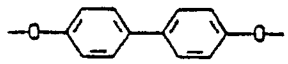

III

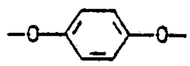

IV

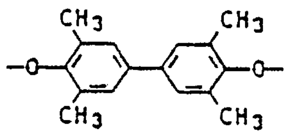

V

d) from 0 to 20 mol % of one or more of the repeat units of the formulae VI, VII, VIII or IX

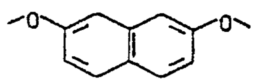

VI

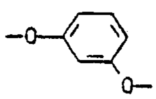

VII

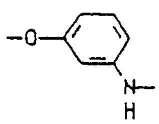

VIII

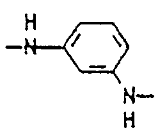

IX

e) a molar amount corresponding to the total amount of components b), c) and d) of repeat units of the formula X

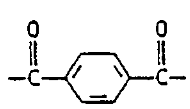

X

the mole percentages of components a), b), c), d) and e) adding up to 100 mol % in each case.

**2.** A wholly aromatic liquid-crystalline polycondensate as claimed in claim 1, wherein a portion of component e) is replaced by repeat units of the formula XI

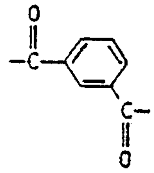

XI

3. A wholly aromatic liquid-crystalline polycondensate as claimed in claim 1 or 2, wherein a portion of component a) is replaced by one or more of the repeat units of the formulae XII, XIII or XIV

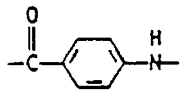

XII

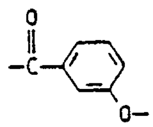

XIII

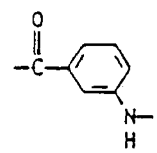

XIV

4. A wholly aromatic liquid-crystalline polycondensate as claimed in any of claims 1 to 3, wherein the partly crystalline phase has a melting point ≧ 240°C and ≦ 290°C.

5. A wholly aromatic liquid-crystalline polycondensate as claimed in any of claims 1 to 4, which is partly crystalline after cooling down the melt at a rate of ≧ 300°C/min to below the glass transition temperature Tg.

6. A process for preparing a wholly aromatic liquid-crystalline polycondensate as claimed in any of claims 1 to 5, by reacting the monomers in the form of the underivatized hydroxyamino and carboxy compounds in a single-stage process and in the molar ratios described in the presence of excess fatty acid anhydride at elevated temperatures and distilling fatty acid anhydride and fatty acid out of the reaction mixture.

7. A process as claimed in claim 6, wherein the wholly aromatic polycondensate, after the condensation in the melt, is postcondensed in solid phase at 150-250 °C.

8. Use of a wholly aromatic liquid-crystalline polycondensate as claimed in any of claims 1 to 7 for the production of filaments, fibers, films and moldings and also surface coatings.

**Revendications**

1. Produits de polycondensation ou polycondensats liquides-cristallins, totalement aromatiques, qui engendrent des masses fondues, formatrices de films ou filmogènes, liquides-cristallines, à une température inférieure à 320 °C et qui sont à double phase dans la plage qui s'étend entre la température de transition vitreuse Tg et le point de fusion, constitués
   a) d'au moins 10% molaires d'unités récurrentes de la formule I

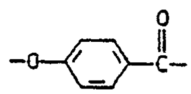

I

b) de 5 à 30% molaires d'unités récurrentes de la formule II

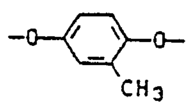

II

c) de 2 à 18% molaires d'au moins l'une des unités récurrentes des formules III, IV et V

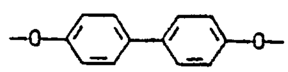

III

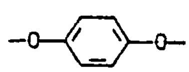

IV

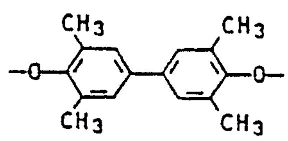

V

d) de 2 à 20% molaires d'au moins l'une des unités récurrentes des formules VI, VII, VIII et IX

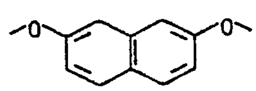

VI

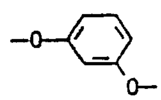

VII

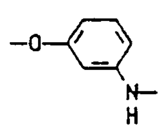

VIII

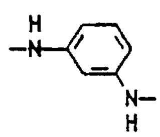

IX

e) d'une proportion molaire correspondant à la somme des composants b), c) et d), d'unités récurrentes de la formule IX

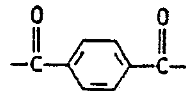

X

où la somme des proportions molaires des composants a), b), c), d) et e) est toujours égale à 100% molaires.

2. Produits de polycondensation pour polycondensats liquides-cristallins totalement aromatiques selon la revendication 1, caractérisés en ce qu'une partie du composant e) est remplacée par des unités récurrentes de la formule XI

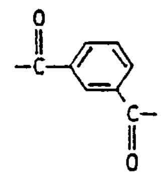

XI

3. Produits de polycondensation ou polycondensats liquides-cristallins, totalement aromatiques, suivant les revendications 1 et 2, caractérisés en ce que le composant a) est remplacé en partie par au moins l'une des unités récurrentes des formules XII, XIII et XIV

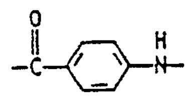

XII

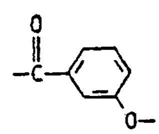

XIII

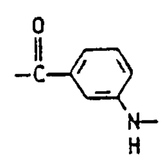

XIV

4. Produits de polycondensation ou polycondensats liquides-cristallins, totalement aromatiques, suivant les revendications 1 à 3, caractérisés en ce que la phase partiellement cristalline possède un point de fusion supérieur ou égal à 240° C et inférieur ou égal à 290° C.

5. Produits de polycondensation ou polycondensats liquides-cristallins, totalement aromatiques, suivant les revendications 1 à 4, caractérisés en ce que les produits de polycondensation ou polycondensats sont partiellement cristallins à une température inférieure à la température de transition vitreuse Tg, après refroidissement de la masse fondue à une vitesse supérieure ou égale à 300° C/min.

6. Procédé de fabrication de produits de polycondensation ou polycondensats liquides-cristallins, totalement aromatiques, selon les revendications 1 à 5, caractérisé en ce que l'on fait réagir les monomères sous la forme des composés hydroxylés, aminés ou carboxylés non transformés en dérivés,au cours d'un processus à étape unique et dans les proportions molaires décrites, sous addition d'anhydride d'acide gras excédentaire, à température élevée et on chasse l'anhydride d'acide gras et l'acide du

mélange réactionnel par distillation.

**7.** Procédé suivant la revendication 6, caractérisé en ce que l'on poursuit la condensation des produits de polycondensation ou polycondensats totalement aromatiques, après la condensation à l'état fondu, par condensation en phase solide à une température de 150 à 250° C.

**8.** Utilisation de produits de polycondensation ou polycondensats liquides-cristallins, totalement aromatiques, selon les revendications 1 à 7, en vue de la fabrication de fils, fibres, feuilles et articles moulés, comme aussi de revêtements.